# EUROPEAN PATENT APPLICATION

(11) **EP 4 368 354 A1**
(43) Date of publication of application: **15.05.2024**
(21) Application number: 22206482.6
(22) Date of filing: 09.11.2022
(51) Int. Cl.: B25J 15/06

(54) **A SUCTION GRIPPER FOR MOVING FOOD ITEMS**

(71) Applicant: Marel A/S, 8200 Arhus N (DK)
(72) Inventor: DALGAARD, Jens Kongensholm, 8200 Århus N (DK)
(74) Representative: Inspicos P/S

(57) **Abstract**

A suction gripper (1) comprising:
- a tube element (2) comprising an internal sidewall defining an internal conduit (3) extending from a suction inlet (5) to an exhaust outlet (6), and
- a supply conduit extending between a supply port and a first ejector nozzle (8) arranged to eject air into the conduit,
wherein the internal conduit defines a suction section (10) extending from the suction inlet to an intermediate position (9), and an exhaust section (11) extending from the intermediate position to the exhaust outlet (6). To enable easy manufacturing, to facilitate manufacturing of at least the tube element in one piece and to facilitate easy cleaning, the suction section and the exhaust section share a continuously extending centre line (12) extending through the intermediate position.

## Description

### INTRODUCTION

The invention relates to a suction gripper, particularly for gripping meat and similar food products. The suction gripper comprises a tube element comprising an internal sidewall defining an internal conduit extending from a suction inlet to an exhaust outlet. A supply conduit extends between a supply port and a first ejector nozzle arranged to eject air into the conduit. When air is injected into the conduit, it provides an air flow out of the exhaust outlet and that creates suction at the suction inlet. The suction is created because of the air flow.

By definition herein, the internal conduit defines a suction section extending from the suction inlet to an intermediate position, and an exhaust section extending from the intermediate position to the exhaust outlet.

The invention further relates to a robot with a suction gripper and a method of cleaning a suction gripper.

### BACKGROUND

Suction grippers are also known as vacuum tube lifters. These permit handling of items by suction of the item to a free end of a tube. Typically, large volumes of air must be evacuated frequently from the lifting tube. At the same time, it is desirable to provide a sufficiently strong vacuum for the vacuum gripping device of the vacuum tube lifter to assure a firm hold on the object and thereby ensure a safe handling of objects. Particularly, such grippers are used for handling heavy objects such as windows or similar plate shaped building components and they are therefore designed to ensure a firm grip by strong vacuum.

A strong suction force is not always desired in food product handling. Often food products, e.g., pieces of meat or fish, are fragile and rough handling may impair the quality. Use of strong vacuum pumps may therefore not be desired.

Suction grippers operating a low suction pressure without a vacuum pump exist. Such grippers are, however, typically technically complex and expensive, and they may be difficult to clean and maintain in an operational condition.

### SUMMARY

It is an object of embodiments of the disclosure to provide a simple, inexpensive, lightweight, and robust suction gripper which requires little or no maintenance, which can be operated at moderate vacuum levels, and which is easy to clean and thereby increases the hygiene in food manufacturing.

For this and other objects, the disclosure, in a first aspect, provides a suction gripper wherein the suction section and the exhaust section share a continuously extending centre line extending through the intermediate position. This simplifies the construction, allows the suction gripper to be made in one piece, and simplifies cleaning - typically by blowing detergent or water along the continuously extending centre line. Various optional features are defined by the independent claims.

"Continuously extending centre line" in this context means a line extending with not sharp bends along a geometric centre of the cross section though the suction section and the exhaust section, i.e., with no sharp bends. Accordingly, the centre line may extend as a straight line or a curved line.

Geometric centre is the arithmetic mean position of all the points in the figure, i.e., it is the point at which a cut-out of the shape (with uniformly distributed mass) could be perfectly balanced on the tip of a pin. Particularly, the internal conduit could have a circular cross section and the continuously extending centre line therefor extends without sharp bends through the centres of the circular cross sections.

A sharp bend is a bend with a radius below 10 mm. Since the centre line has no sharp curves with a radius below 10 mm but on the contrary extends as a straight line or with only slight curvatures, cleaning is further facilitated by easy access to the interior, and a relatively large air flow can be established with relatively small pressure differences between the suction inlet and the exhaust outlet. Fragile objects such as food and particularly meat can therefore be handled with caution.

In a second aspect, the disclosure provides a robot for moving a food item and having a suction gripper according to the first aspect for picking up the food item and delivering the food item.

The robot may comprise first pneumatic control means configured to control air supply to the first ejector nozzle to create an air flow and thereby suction at the suction inlet while picking up the food item, and to prevent the air flow and thereby stop the suction when delivering the food item.

The robot may comprise second pneumatic control means configured to control air supply to the optional second ejector nozzle to create an air flow against the first direction and thereby ejection of the food item when delivering the food item. The first and second pneumatic control means could be an integrated control means configured to create air flow only in one of the first and the second ejector nozzles.

The functions of the pneumatic control means may be implemented using standard hardware circuits, using software programs and data in conjunction with a suitably programmed digital microprocessor or general-purpose computer, or a cloud computer, and/or using application specific integrated circuitry, and/or using one or more digital signal processors and controlled pneumatic valves.

Software program instructions and data may be stored on a non-transitory, computer-readable storage medium, or in the cloud, and when the instructions are executed by a computer or other suitable processor control, the computer or processor performs the functions associated with those instructions. Accordingly, the disclosure comprises software readable by computer means for carrying out the pneumatic control of the suction gripper coordinated with the movement of the robot and thereby providing the system for pick and place of food products.

In a second aspect, the disclosure provides a method of cleaning a suction gripper according to the first aspect. The method comprises inserting the suction inlet in a washing fluid and applying air through the first ejector nozzle and using the suction at the suction inlet to draw the washing fluid from the suction inlet to the exhaust outlet. Due to the continuously extending centre line, this procedure potentially provides a sufficiently hygienically gripper for use in food product manufacturing.

In a third aspect, the disclosure provides a method of cleaning a suction gripper according to the first aspect. The method comprises inserting a flexible pipe-brush into the conduit. Due to the continuously extending centre line, this procedure potentially provides a sufficiently hygienically gripper for use in food product manufacturing.

### BRIEF DESCRIPTION OF THE DRAWING

The accompanying drawings are included to provide a further understanding of embodiments and are incorporated into and forms part of this specification. The drawings illustrate embodiments and together with the description explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
Fig. 1 illustrates one embodiment of the suction gripper;
Fig. 2 illustrates another embodiment of the suction gripper;
Fig. 3 illustrates yet another embodiment of the suction gripper; and
Fig. 4 illustrates an embodiment where the suction gripper comprises two tube elements.

### DESCRIPTION OF EMBODIMENT

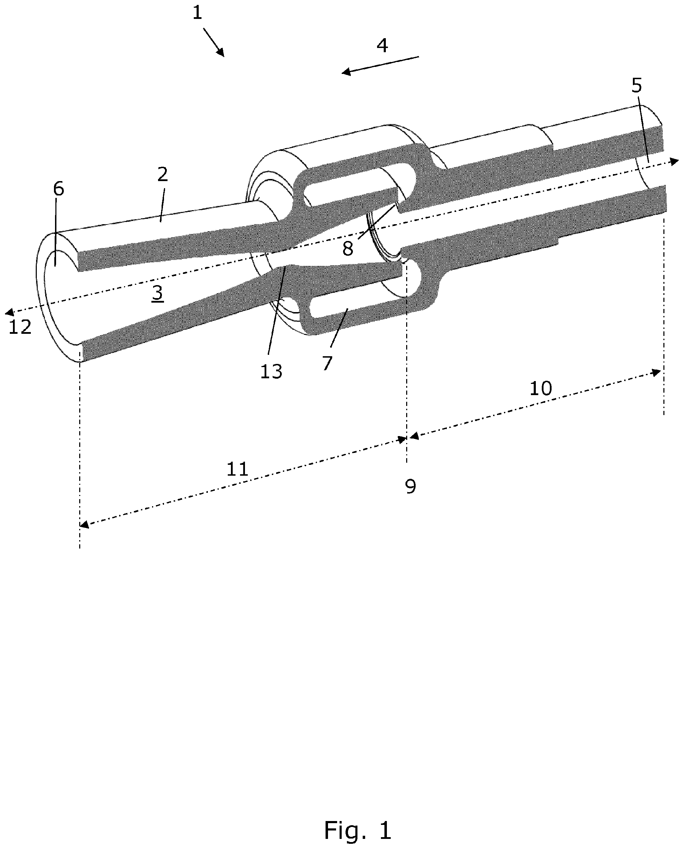

Fig. 1 illustrates a suction gripper 1 comprising a tube element 2 comprising an internal sidewall circumferentially about an internal conduit 3. The internal conduit 3 extends from a suction inlet 5 to an exhaust outlet 6.

A supply 7 extends between a supply port and a nozzle, herein referred to as the first ejector nozzle 8. The first ejector nozzle ejects air, particularly atmospheric air, particularly filtered atmospheric air into the conduit, and particularly it injects the air at least partly in the direction towards the exhaust outlet 6 - this direction is herein referred to as the exhaust direction, and it is indicated by the arrow 4.

By definition herein, the internal conduit defines a suction section 10 extending from the suction inlet 5 to an intermediate position 9, and an exhaust section 11 extending from the intermediate position 9 to the exhaust outlet 6.

The suction section and the exhaust section share a continuously extending centre line 12 extending through the intermediate position.

The first ejector nozzle 8 is in the sidewall at the intermediate position and at a distance to the centre line.

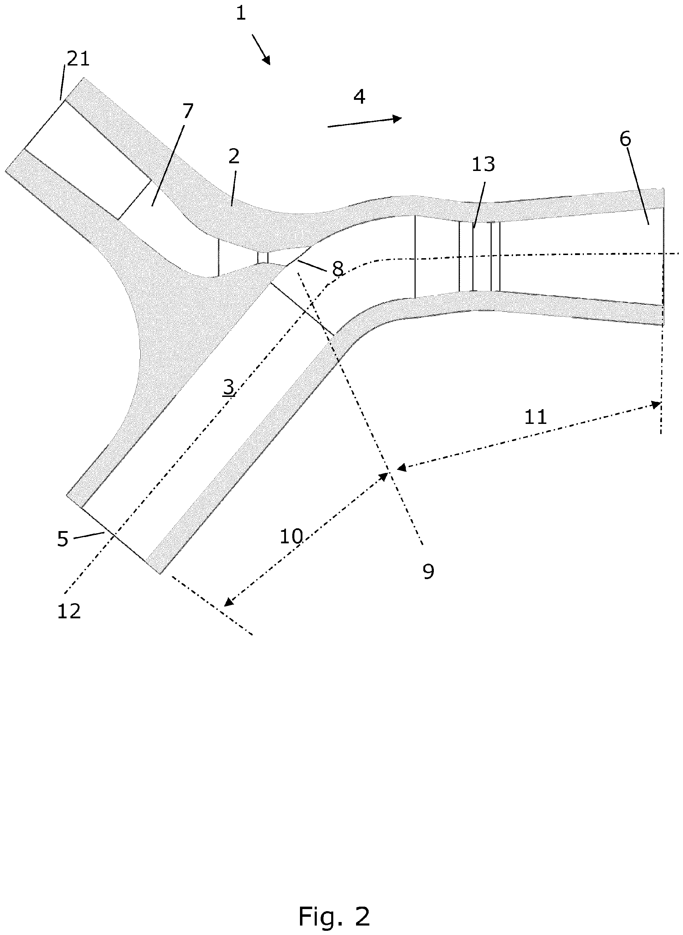

The supply conduit of the embodiment of Fig. 1 extends circumferentially about the internal conduit 3. In the embodiment of Fig. 2, the supply conduit extends outwards, i.e., away from the ejector nozzle, e.g., in a radial direction, and terminates at the supply port 21. Again, the air is at least partly injected in the direction towards the exhaust outlet 6 and causes a flow of air from the suction inlet 5 to the exhaust outlet 6.

The embodiment of Fig. 2 also has a continuously extending centre line 12 extending through the intermediate position 9. Particularly, the centre line has no sharp curves with a radius below 10 mm but on the contrary only slight curvatures enabling easy cleaning and access to the interior. Additionally, the slight curvature enables a flow of air with only small pressure differences between the suction inlet and the exhaust outlet 6 and therefore protects fragile objects such as food and particularly meat.

In the embodiment of Fig. 2, the internal sidewall extends continuously across the ejector nozzle meaning that there is a continuously extending line with no sharp bends of a curvature below 10 mm when following the sidewall across the ejector nozzle 8. If tangents to the internal sidewall are defined on opposite sides of the ejector nozzle they may have the same angle to the centre line, or the angle of the tangents to the centre line may differ less than 20 pct. such as less than 10 pct. such as less than 5 pct. or they may be parallel.

Additionally, the ejector nozzle could be flush with the sidewall. This is illustrated in Fig. 2.

The internal conduit may have a fixed cross section in an intermediate zone extending on opposite sides of the intermediate position. However, as indicated in Figs. 1 and 2, embodiments exist where the exhaust section 11 has a cross section which changes between the intermediate position 9 and the exhaust outlet 6. In the embodiments of Figs. 1 and 2, the exhaust section defines a narrow section 13 between two wider sections, the narrow section 13 having a smaller cross section than the wide sections.

The suction grippers in Figs. 1 and 2 are made in one piece, e.g., by an additive manufacturing process such as SLS or SLA etc.

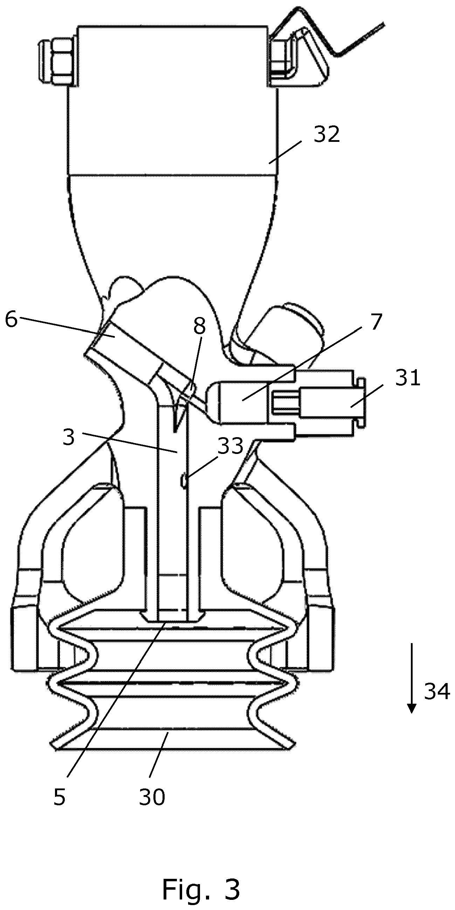

Fig. 3 illustrates an embodiment of the suction gripper including a flexible suction end piece 30. In this embodiment, the tube element is made in one piece, e.g., by an additive manufacturing process such as selective laser sintering (SLS) or stereolithography (SLA) etc, but the suction gripper comprises additional components including the flexible suction end piece, a supply port bushing 31 for screw attachment of air.

The suction gripper illustrated in Fig. 3 comprises an attachment structure 32 for attachment to a robot. This attachment structure is made in one piece with the tube element, but it could also have been a separate element assembled to the tube element, e.g., adhesively.

The internal sidewall may have a smooth inner surface, and particularly have a surface roughness below RU-2. This further facilitates a large air flow at small pressure vacuum pressure at the suction inlet and further protects fragile objects like meat.

In the embodiments of Figs. 2 and 3, the suction section extends at an angle to the exhaust section which is in the range of 20-40 degrees. But as illustrated in Fig. 1, the angle could also be 0 degrees.

As illustrated in Figs. 1 and 2, the exhaust section has a centre line extending in an exhaust direction illustrated by the arrow 4. The first ejector is configured to eject air at least partly in a direction, referred to herein as a first direction. To increase the flow of air from the suction inlet to the exhaust outlet, this first direction may at least have a component in the exhaust direction, e.g., such that the angle of the first direction is less than 80 degrees, such as 45 degrees, such as 30 degrees, or the first direction could be equal to the exhaust direction.

The suction gripper may comprise a second ejector nozzle 33, indicted in Fig. 3 and arranged to eject air into the suction section. This may efficiently reject objects from the suction inlet, and it may be particularly advantageous when handling slightly sticking products such as meat.

In Fig. 3, the second ejector nozzle is only schematically illustrated. It could be shaped such that it ejects air in a second direction away from the exhaust outlet, i.e., at least partly towards the suction inlet. That means that the second direction has a component in the suction direction. In Fig. 3, the suction direction is indicated by the arrow 34. The angle of the second direction could be less than 80 degrees, such as 45 degrees, such as 30 degrees, or the second direction could be equal to the suction direction.

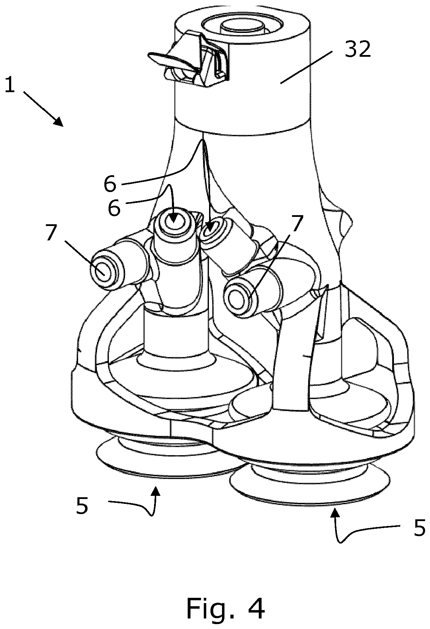

Fig. 4 illustrates a suction gripper comprising two tube elements 2. The tube elements both comprises the features of the tube element illustrated in Figs. 1-3, i.e., they both have an internal sidewall defining an internal conduit 3 extending from a suction inlet 5 to an exhaust outlet 6.

They also have each their own supply conduit extending between a supply port and a first ejector nozzle 8 arranged to eject air into the conduit. Moreover, the suction section and the exhaust section share a continuously extending centre line extending through the intermediate position.

The two tube elements are formed in one piece, e.g., by an additive manufacturing method such as SLS or SLA.

The suction grippers illustrated in Figs. 1-4 may be attached to a robot and work in a food processing line, e.g., for packing meat or similar food products. In such a line, the robot may pick the food product by use of the suction gripper and place the food e.g., on a board or in a tray or similar package. Such a robot may include pneumatic control means configured to control air supply to the first ejector nozzle to create an air flow and thereby suction at the suction inlet while picking up the food item.

Relative to the embodiments comprising a second ejector nozzle, the pneumatic control means may, when delivering the food item, provide air in such an ejector nozzle. The robot may e.g., comprise a second pneumatic control means configured to control air supply to the second ejector nozzle to create an air flow against the first direction and thereby ejection of the food item when delivering the food item. Particularly, the first and second pneumatic control means may form integrated control means configured to create air flow only in one of the first and the second ejector nozzles. The pneumatic control means may be integrated in the attachment structure 32 for attaching the suction gripper to a robot. The pneumatic control means may comprise a computer structure coupled to one or two electrically controlled pneumatic valves providing air to one or both of the first ejector nozzle and second nozzle ejector nozzle, and it may receive either robot position data from a robot controller and/or commands instructing to either pick up or deliver the food product.

### LIST OF EMBODIMENTS

1. A suction gripper (1) comprising:
   - a tube element (2) comprising an internal sidewall defining an internal conduit (3) extending from a suction inlet (5) to an exhaust outlet (6), and
   - a supply conduit (7) extending between a supply port (21) and a first ejector nozzle (8) arranged to eject air into the conduit,
   wherein the internal conduit defines a suction section (10) extending from the suction inlet to an intermediate position (9), and an exhaust section (11) extending from the intermediate position to the exhaust outlet, wherein the suction section and the exhaust section share a continuously extending centre line (12) extending through the intermediate position.
2. The suction gripper according to embodiment 1, wherein the first ejector nozzle (8) is in the sidewall at the intermediate position (9) and at a distance to the centre line (12).
3. The suction gripper according to embodiment 2, wherein the supply conduit (7) extends outwards from the ejector nozzle (8).
4. The suction gripper according to embodiment 2-3, wherein the internal sidewall extends continuously across the ejector nozzle.
5. The suction gripper according to embodiment 4, wherein the ejector nozzle is flush with the sidewall.
6. The suction gripper according to any of the preceding embodiments, wherein the internal conduit has a fixed cross section in an intermediate zone extending on opposite sides of the intermediate position.
7. The suction gripper according to any of the preceding embodiments, wherein the exhaust section has a cross section which changes between the intermediate position and the exhaust outlet.
8. The suction gripper according to embodiment 7, wherein the exhaust section defines a narrow section between two wide sections, the narrow section having a smaller cross section than the wide sections.
9. The suction gripper according to any of the preceding embodiments, comprising a flexible suction end piece, and wherein the tube element at the suction inlet forms a flange for releasable attachment of the flexible suction end piece.
10. The suction gripper according to any of the preceding embodiments, wherein the tube element is made in one piece (by an additive manufacturing process such as SLS or SLA).
11. The suction gripper according to embodiment 10, wherein the tube element and the ejector nozzle is formed in one piece.
12. The suction gripper according to any of the preceding embodiments, wherein the tube element forms an attachment structure for attachment to a robot.
13. The suction gripper according to any of the preceding embodiments, wherein the internal sidewall has a surface roughness below RU-2.
14. The suction gripper according to any of the preceding embodiments, wherein the suction section extends at an angle to the exhaust section.
15. The suction gripper according to any of the preceding embodiments, wherein the exhaust section has a centre line extending in an exhaust direction, and the first ejector is configured to eject air in a first direction having a component in the exhaust direction.
16. The suction gripper according to any of the preceding embodiments, comprising a second ejector nozzle arranged to eject air into the suction section.
17. The suction gripper according to embodiment 16, wherein the suction section has a centre line extending in a suction direction, and the second ejector is configured to eject air in a second direction having a component in the suction direction.
18. The suction gripper according to any of the preceding embodiments comprising
   - at least two tube elements (2), each comprising an internal sidewall defining an internal conduit (3) extending from a suction inlet (5) to an exhaust outlet (6), and
   - a supply conduit for each tube element, each supply conduit extending between a supply port and a first ejector nozzle (8) arranged to eject air into the conduit,
   wherein each internal conduit defines a suction section (10) extending from the suction inlet to an intermediate position, and an exhaust section (11) extending from the intermediate position to the exhaust outlet, wherein the suction section and the exhaust section share a continuously extending centre line extending through the intermediate position.
19. The suction gripper according to embodiment 18, wherein the at least two tube elements are formed in one piece.
20. A robot for moving a food item and having a suction gripper according to any of the preceding embodiments for picking up the food item and delivering the food item.
21. The robot according to embodiment 20, comprising first pneumatic control means configured to control air supply to the first ejector nozzle to create an air flow and thereby suction at the suction inlet while picking up the food item, and to prevent the air flow and thereby stop the suction when delivering the food item.
22. The robot according to embodiment 21 and any of embodiments 16-17, comprising second pneumatic control means configured to control air supply to the second ejector nozzle to create an air flow against the first direction and thereby ejection of the food item when delivering the food item.
23. The robot according to embodiment 21 or 22, wherein the first and second pneumatic control means is an integrated control means configured to create air flow only in one of the first and the second ejector nozzles.
24. A method of cleaning a suction gripper according to any of embodiments 1-19, the method comprising inserting the suction inlet in a washing fluid and applying air through the first ejector nozzle and using the suction at the suction inlet to draw the washing fluid from the suction inlet to the exhaust outlet.

## Claims

1. A suction gripper (1) comprising:
- a tube element (2) comprising an internal sidewall defining an internal conduit (3) extending from a suction inlet (5) to an exhaust outlet (6), and
- a supply conduit (7) extending between a supply port (21) and a first ejector nozzle (8) arranged to eject air into the conduit,
wherein the internal conduit defines a suction section (10) extending from the suction inlet to an intermediate position (9), and an exhaust section (11) extending from the intermediate position to the exhaust outlet, wherein the suction section and the exhaust section share a continuously extending centre line (12) extending through the intermediate position.

2. The suction gripper according to claim 1, wherein the first ejector nozzle (8) is in the sidewall at the intermediate position (9) and at a distance to the centre line (12).

3. The suction gripper according to claim 2, wherein the supply conduit (7) extends outwards from the ejector nozzle (8).

4. The suction gripper according to claim 2-3, wherein the internal sidewall extends continuously across the ejector nozzle.

5. The suction gripper according to claim 4, wherein the ejector nozzle is flush with the sidewall.

6. The suction gripper according to any of the preceding claims, wherein the internal conduit has a fixed cross section in an intermediate zone extending on opposite sides of the intermediate position.

7. The suction gripper according to any of the preceding claims, wherein the exhaust section has a cross section which changes between the intermediate position and the exhaust outlet.

8. The suction gripper according to claim 7, wherein the exhaust section defines a narrow section between two wide sections, the narrow section having a smaller cross section than the wide sections.

9. The suction gripper according to any of the preceding claims, comprising a flexible suction end piece, and wherein the tube element at the suction inlet forms a flange for releasable attachment of the flexible suction end piece.

10. The suction gripper according to any of the preceding claims, wherein the tube element is made in one piece (by an additive manufacturing process such as SLS or SLA).

11. The suction gripper according to claim 10, wherein the tube element and the ejector nozzle is formed in one piece.

12. The suction gripper according to any of the preceding claims, wherein the tube element forms an attachment structure for attachment to a robot.

13. The suction gripper according to any of the preceding claims, wherein the internal sidewall has a surface roughness below RU-2.

14. The suction gripper according to any of the preceding claims, wherein the suction section extends at an angle to the exhaust section.

15. The suction gripper according to any of the preceding claims, wherein the exhaust section has a centre line extending in an exhaust direction, and the first ejector is configured to eject air in a first direction having a component in the exhaust direction.
